# EUROPEAN PATENT APPLICATION

(11) **EP 4 144 206 A1**
(43) Date of publication of application: **08.03.2023**
(21) Application number: 22193798.0
(22) Date of filing: 03.09.2022
(51) Int. Cl.: A01F 25/16, A01B 79/00

(54) **A CONTROL SYSTEM**

(30) Priority: 03.09.2021 GB 202112607
(71) Applicant: J.C. Bamford Excavators Limited, Uttoxeter Staffordshire ST14 5JP (GB)
(72) Inventor: OWSTON, Edward, Uttoxeter, ST14 5JP (GB); NIXON, John, Uttoxeter, ST14 5JP (GB)
(74) Representative: Foot, Paul Matthew James

(57) **Abstract**

A control system for a working machine, wherein the working machine comprises a ground engaging structure to perform a compaction operation by passing over a body of a harvested crop; the control system comprising:
a controller; and
at least one sensor providing an input to the controller;
wherein the controller is configured to determine a state of compaction of a section of the body of the harvested crop based on at least the input from the sensor; and wherein the controller provides at least one output to control the movement of the working machine over the body of the harvested crop and/or to provide an indication to an operator of the working machine as to the state of compaction of the body of the harvested crop at a particular section thereof.

## Description

### FIELD

The present teachings relate to a control system for a working machine, a working machine, and to a method of controlling a working machine to perform a compaction operation.

### BACKGROUND

Silage is a foodstuff for cattle that is most commonly made from grass and maize, but may also be made from alfalfa, vetches, oats, rye or sorghum. It is an effective way of storing these crops from a harvest time in summer months for animal feed in winter when such crops are not available, whilst preserving their nutritional content. Silage is made by compacting the crop to minimise the volume it takes up and to expel air, before enclosing it in an impermeable enclosure and allowing it to ferment over several weeks in this anaerobic environment. The enclosure is then opened and the silage is fed to livestock as required.

One way of forming the impermeable enclosure is to wrap a bale of the crop in plastics sheeting. Another way to form the impermeable enclosure is to deposit a large amount of the crop in a clamp or pit with a base and three walls forming an incomplete rectangle and then covering the exposed surface of the crop in a plastics sheet.

Working machines, specifically material handling machines, of various types such as wheeled loading shovels, telescopic handlers, tractors and the like have traditionally been used in depositing the harvested crop in the clamp and the compaction of harvested crop to form silage. Typically, the working machine passes over the harvested crop, and the weight of the working machine compacts the crop via the wheels. The working machine has a working arm, and an attachment to the working arm, such as forks or a push-off buckrake, which is used to distribute the top layer of harvested crop within the clamp as evenly as possible prior to the compaction operation.

The open side of silage clamp allows access for the working machine to distribute the crop. The harvested crop is located in the volume defined by the walls of the silage clamp.

To compact the grass, the operator repeatedly passes over the crop in offset linear strips until the operator judges the crop has reached a sufficient state of compaction. However, the operator has to rely on experience and visual indicators to judge whether the crop has been sufficiently compacted, which can be inaccurate.

This leads to operational inefficiencies, because the operator may have to make additional passes over the harvested crop to try and ensure the harvested crop has reached a sufficient state of compaction, resulting in extra travel of the machine with attendant increases in fuel use, machine wear and tear and labour cost. Further, the compaction of the harvested crop may be non-uniform and the quality of the silage may be poor if not all of the crop has been compacted enough or has been excessively compacted.

The present teachings seek to overcome or at least mitigate one or more problems associated with the prior art.

### SUMMARY

A first aspect of the teachings provides a control system for a working machine, wherein the working machine comprises a ground engaging structure to perform a compaction operation by passing over a body of a harvested crop; the control system comprising:
a controller; and
at least one sensor providing an input to the controller;
   wherein the controller is configured to determine a state of compaction of a section of the body of the harvested crop based on at least the input from the sensor; and wherein the controller provides at least one output to control the movement of the working machine over the body of the harvested crop and/or to provide an indication to an operator of the working machine as to the state of compaction of the body of the harvested crop at a particular section thereof.

Advantageously, the determination of the state of compaction indicates which sections of the harvested crop need to be compacted. This helps to increase the uniformity of the compaction, makes the operation more efficient and provides a better indication that the harvested crop has been sufficiently compacted.

The control system may be configured to store at least one machine parameter, the machine parameter optionally being at least one of: distance between a pair of tyres of the ground engaging structure, width of each of the pair of tyres, diameter of each of the pair of tyres of the working machine.

Advantageously, the input of the machine parameters enables the control system to account for sections where compaction may be lower. For example, at the boundaries, it is not possible for all tyres to pass over the harvested crop. Similarly, the control system can record the speed at which the working machine has travelled over sections of the harvested crop, which will affect the level of compaction, and use information in the determination of the state of compaction.

The control system may be configured to adjust the output based on the stored machine parameter.

Advantageously, this will increase the accuracy of the state of compaction.

The controller may calculate compaction on a per-wheel basis.

The controller may be configured to determine when the working machine is less than a distance between each of a front or rear pair of tyres plus the width of one of the tyres from a side of the body of harvested crop, and/or the controller may be configured to determine when the working machine is less that a distance between a front and a rear axle plus a radius of one wheel from a side of the body of harvested crop.

The controller may be configured to adjust the output when the controller has determined that the working machine is less than a distance between each of the front or rear pairs of tyres plus the width of one of the tyres from a side of the body of harvested crop, and/or that the working machine is less that a distance between a front and rear axle plus a radius of one wheel from a side of the body of harvested crop.

The at least one sensor may be configured to determine the position of the working machine as the working machine passes over the body of the harvested crop.

The at least one sensor may be configured to determine the position of the working machine in at least one of an x-direction, a y-direction, and/or a z-direction.

Advantageously, the control system can use the position sensors to determine the sections over which the working machine has passed and compacted, as well as the sections which have not been compacted. This may help to ensure that the operator doesn't miss any section of the harvested crop due to human error, and therefore increase the quality of the harvested crop.

The control system may be further configured to produce a real time output indicative of the state of compaction of the harvested crop.

Advantageously, the output can be used to indicate to the operator sections of the harvested crop which require additional compaction as they undertake a compaction operation. This increases the uniformity and efficiency of the compaction operation.

The output may be a visual indication of the state of compaction of the harvested crop, optionally wherein the visual indication is a map.

Advantageously, a visual indication is a simple way to show the operator information about the state of compaction of harvested crop. A visual indication, such as a map, is easy to process whilst the operator is operating the working machine.

The output may be configured to indicate to the operator to control at least one of machine travelling speed, machine travelling direction and machine steering and/or to directly control movement of the working machine by controlling at least one of machine travelling speed, machine travelling direction and machine steering.

Advantageously, this enables the control system to automatically adjust the output to indicate a command to the operator, or to directly control the working machine, which may increase the efficiency of the compaction operation compared to relying solely on operator judgement.

The sensor may include at least one of: a GNSS receiver, an inertial sensor, a tilt sensor configured to measure the inclination of the working machine relative to a fixed axis, a steering angle sensor, and a travelling speed sensor, a LIDAR sensor, and an electric compass.

Advantageously, these sensors are relatively low cost and simple to install on the working machine. Additionally, some of the sensors may already fitted on the working machine for other purposes, meaning additional components are not necessary. The use of more than one of the sensors in combination may further improve the accuracy of the determination of the state of compaction.

The at least one sensor may be configured to detect the absolute position of the working machine in at least an x and y plane and/or the at least one sensor may be configured to determine the position of the working machine relative to a predetermined location in at least an x-y plane, and/or wherein the predetermined location may be at the start point of the working machine and/or on a boundary of the harvested crop.

The at least one sensor may be further configured to detect the rate of change of altitude of the working machine relative to a fixed plane.

Advantageously, the rate of change of altitude of the working machine at a particular location can provide an indication of the state of compaction of the harvested crop. A relatively low rate of change may be an indication of a well compacted harvested crop at that location and a relatively high rate of change may be indicative of a poorly compacted harvested crop. Using a crop parameter in the determination may help to improve the accuracy of the output.

The control system may be further configured to determine whether the harvested crop has reached a predetermined state of compaction based on inputs from the at least one sensor.

Advantageously, determining that the harvested crop has reached a predetermined state of compaction indicates to the operator that the compaction operation can stop, which may help to improve the efficiency of the compaction operation.

The control system may be further configured to determine the area of the harvested crop to be compacted based on inputs from the at least one sensor.

Advantageously, the determination of the area of harvested crop sets limits to the output, and prevents the control system from indicating to the operator to compact areas outside of the harvested crop area.

The control system may determine the predetermined state of compaction based on a number of passes over a particular location.

The control system may be further configured to determine the area of the harvested crop to be compacted by storing a location of the working machine indicative of at least one corner of the area.

Advantageously, this means the operator can drive to at least one corner of the harvested crop at the start of the compaction operation to define the area of the harvested crop. Advantageously, this is a simple way to input the area into the working machine, and does not require a high level of operator skill.

The control system may be further configured to automatically adjust the output to indicate one of the following to the operator: to pass over a section of the harvested crop, to avoid passing over a section of the harvested crop, to change the orientation of the working machine, to increase or decrease a speed of the working machine.

Advantageously, depending on the state of compaction of the harvested crop, the control system can instruct the operator to perform an action to optimise the compaction process. The control system may be able to determine which operation will be most efficient depending on the scenario.

The control system may be further configured to adjust the output to indicate that the operator should increase the number of times the working machine passes over a section of the harvested crop, decrease the speed of the working machine and/or change the orientation of the working machine upon determining that the harvested crop has not reached the required state of compaction.

The control system may be further configured to calibrate the at least one sensor, optionally wherein the control system is configured to calibrate the at least one sensor by instructing the operator to move the working machine to a calibration location, optionally wherein the calibration location is the start point of the working machine.

Advantageously, the inclusion of a calibration step improves the accuracy of the sensors, and therefore the accuracy of the output. This may help to improve the uniformity of compaction of the harvested crop.

A further aspect of the teachings provides a working machine comprising the control system of the first aspect, further comprising:
a ground engaging structure, optionally wherein the ground engaging structure comprises at least one pair of tyres; and
optionally a working implement configured to distribute additional harvested crop onto the body of harvested crop, optionally wherein the working implement is a fork.

Advantageously, the contact between the ground engaging structure and the harvested crop causes compaction of the harvested crop, and the forks may be used to progressively deposit and distribute the harvested crop onto the body as it is harvested in order to enlarge the body and between compaction operations.

The machine parameters may be stored in the control system. The machine parameters may be at least one of: distance between the pair of tyres, width of each tyre, working machine weight transmitted through each tyre, diameter of each tyre of the working machine, distance between a front and a rear pair of tyres.

Advantageously, the input of the machine parameters enables the control system to account for sections where compaction may be lower. For example, at the boundaries, it is not possible for all tyres to pass over the harvested crop. Similarly, the control system can record the speed at which the working machine has travelled over sections of the harvested crop, which will affect the level of compaction, and use information in the determination of the state of compaction.

The control system may be configured to adjust the output of the working machine based on the machine parameters.

Advantageously, this will increase the accuracy of the state of compaction.

The controller may calculate compaction on a per-wheel basis.

The controller may be configured to determine when the working machine is less than a distance between each of the front or rear pair of tyres plus the width of one of the tyres from a side of the body of harvested crop, and/or the controller may be configured to determine when the working machine is less that a distance between a front and rear axle plus a radius of one wheel from a side of the body of harvested crop.

The controller may be configured to adjust the output of the working machine based on the determination of the distance from the side of the body of harvested crop.

The control system may be configured to determine whether the working machine is within an area of harvested crop based on inputs from the at least one sensor, optionally based on inputs from the tilt sensor and/or the position sensor.

As the working machine mounts the area defined by the harvested crop, the working machine will typically be inclined relative to the ground. Advantageously, this can be used to indicate that the working machine is within the area defined by the harvested crop.

The control system may be configured to determine the area of harvested crop distributed by the working implement based on inputs from the at least one sensor, optionally wherein the determination is based on the position of the working machine in the z-direction.

Advantageously, this enables the control system to account for additional harvested crop distributed by the working implement when determining the state of compaction of the harvested crop.

A further aspect of the teachings provides a method of controlling a working machine to perform a compaction operation by passing over a body of a harvested crop, the method comprising the step of:
detecting an input from at least one sensor;
determining a state of compaction of the body of the harvested crop based on the input;
providing an output to control the movement of the working machine over the body of the harvested crop and/or to provide an indication to an operator of the working machine as to the state of compaction of the of the harvested crop at a particular section thereof.

Advantageously, the determination of the real time state of compaction indicates which sections of the harvested crop need to be further compacted. This increases the uniformity of the compaction, makes the operation more efficient and provides a better guarantee that the harvested crop has been sufficiently compacted.

The method may further comprise the step of producing an output indicative of the state of compaction of the body of harvested crop.

Advantageously, the output can be used to indicate to the operator sections of the harvested crop which require additional compaction. This increases the uniformity and accuracy of the compaction operation.

The method may further comprise the step of adjusting the output of the working machine based on inputs from at least one sensor.

Advantageously, this input enables the control system to use the position of the working machine, and therefore the section of harvested crop over which the working machine has passed, in the determination of the real time state of compaction.

The method may further comprise the step of ceasing to compact a section of harvested crop when the control system determines the section of harvested crop has reached a predetermined state of compaction.

The method may further comprise the step of determining the area of the harvested crop by moving the working machine to at least one corner of the area of the harvested crop and storing a location of the working machine indicative of at least one corner of the area.

The method may comprise the further step of: storing at least one machine parameter. The machine parameter may be at least one of: distance between a pair of tyres of the ground engaging structure, width of each of the pair of tyres, diameter of each of the pair of tyres of the working machine

The method may comprise the further step of: adjusting the output based on the stored machine parameter.

### BRIEF DESCRIPTION OF THE DRAWINGS

Embodiments will now be described with reference to the accompanying drawings, in which:
Figure 1 is a side view of a working machine of an embodiment of the present teachings;
Figure 2 is perspective view of the working machine of Figure 1 performing a compaction operation on a body of a harvested crop;
Figure 3 is sectional view of Figure 2 through the plane x of the working machine of Figure 1 performing a compaction operation;
Figure 4 is a plan view of the working machine of Figure 1 performing a compaction operation;
Figure 5 is a block diagram of the control system for performing the compaction operation;
Figure 6 is an embodiment of the output produced by the control system of Figure 5; and
Figures 7a and 7b are plan views of the working machine of Figure 1 setting an area of the body of the harvested crop;
Figure 8 is a plan view of the working machine of Figure 1 performing the compaction operation;
Figure 9 is a flow chart of the control system of Figure 5.

### DETAILED DESCRIPTION OF EMBODIMENT(S)

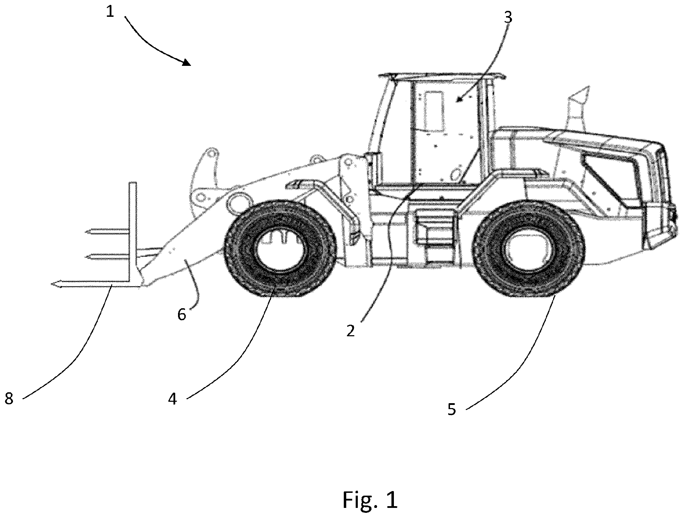

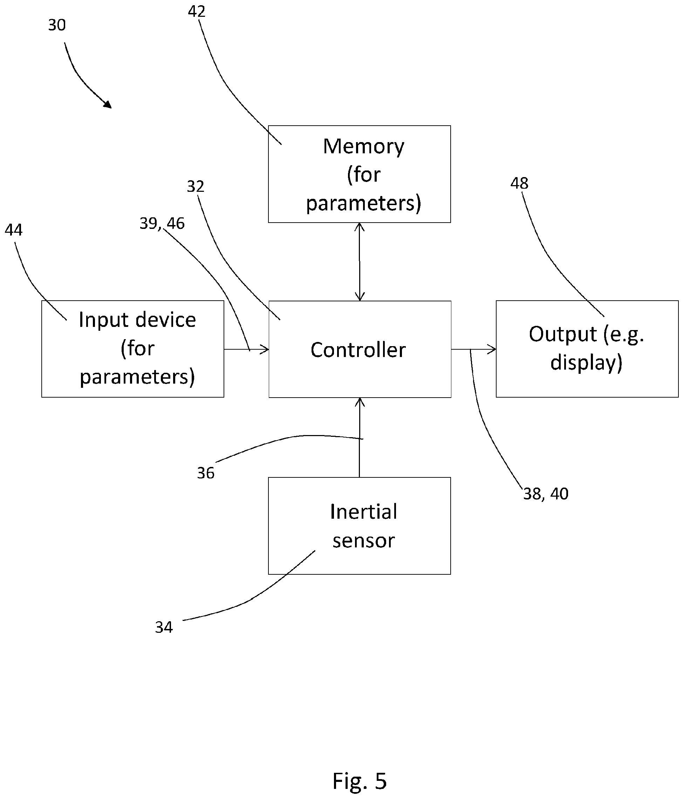

Referring firstly to Figure 1, an embodiment includes a working machine 1 which may be a material handling machine, having a control system 30 (Figure 5). The working machine 1 performs a compaction operation by passing over a body of a harvested crop 18. In this embodiment, the material handling machine 1 is a wheeled loading shovel. In alternative embodiments, the working machine 1 may be a telescopic handler or a tractor, for example.

The machine 1 includes a machine body 2. The body 2 may include an operator structure 3 to accommodate a machine operator, for example, an enclosed operator structure from which an operator can operate the machine 1. In other embodiments, the working machine 1 may have an open canopy structure (not shown) for the operator.

In an embodiment, the machine 1 has a ground engaging propulsion structure 4, 5 comprising a first axle and a second axle, each axle being coupled to a pair of wheels (two wheels 4, 5 are shown in Figure 1 with one wheel 4 connected to the first axle and one wheel 5 connected to the second axle). The first axle may be a front axle and the second axle may be a rear axle. One or both of the axles may be coupled to a motor or engine which is configured to drive movement of one or both pairs of wheels 4, 5. Thus, the wheels 4, 5 may contact a ground surface and rotation of the wheels 4, 5 may cause movement of the working machine 1 with respect to the ground surface.

In other embodiments, the ground engaging propulsion structure may comprise tracks or rollers. In other embodiments, the drive transmission may not be operated by the motor via a direct mechanical linkage, but instead the motor may drive a hydraulic pump, which subsequently provides traction via one or more hydraulic motors that are drivingly connected to the wheels or tracks. Alternatively, the drive transmission may comprise an electric motor for providing traction to the wheels or tracks.

A material handling apparatus 6 is coupled to the machine body 2. The material handling apparatus includes a working arm 6 mounted to the front of the machine body 2. A working implement, in this case a fork 8, is mounted to an end of the working arm 6. In alternative embodiments, the working implement may be any suitable attachment, such as a grab or buckrake. The working arm 6 raises and lowers the working implement 8.

The working machine 1 also include a hydraulic fluid circuit arranged to provide hydraulic fluid to one or more hydraulic actuators for performing working operations such as moving the working arm 6 of the working machine 1.

In order to perform the compaction operation on the harvested crop 18, a storage receptacle 20 (pit or clamp) is provided to contain the harvested crop 18 throughout the compaction operation. The crop is harvested by an agricultural machine such as a forage harvester (not shown), and transferred to a transfer vehicle such as a trailer (not shown). The crop is subsequently deposited next to the storage receptacle 20 by the transfer vehicle for the working machine 1 to distribute the crop 18 in the storage receptacle 20 and perform the compaction operation.

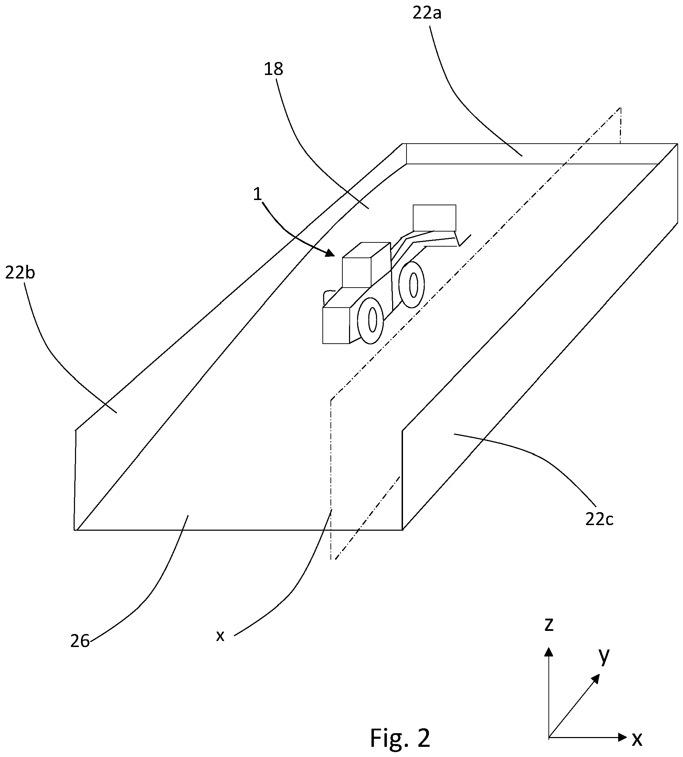

In this embodiment, as illustrated in Figure 2, the storage receptacle 20 is generally rectangular. The storage receptacle 20 includes three walls 22a-c and a floor 24, which define an internal volume for containing the body of the harvested crop 18. The storage receptacle 20 includes an opening 26 at one side to allow for the working machine 1 to enter the storage receptacle 20 and access the body of the harvested crop 18. It shall be appreciated that any suitable storage receptacle may be used, for example a non-rectangular storage receptacle, or the storage receptacle may be omitted and the crop stored in a mound deposited on a surface.

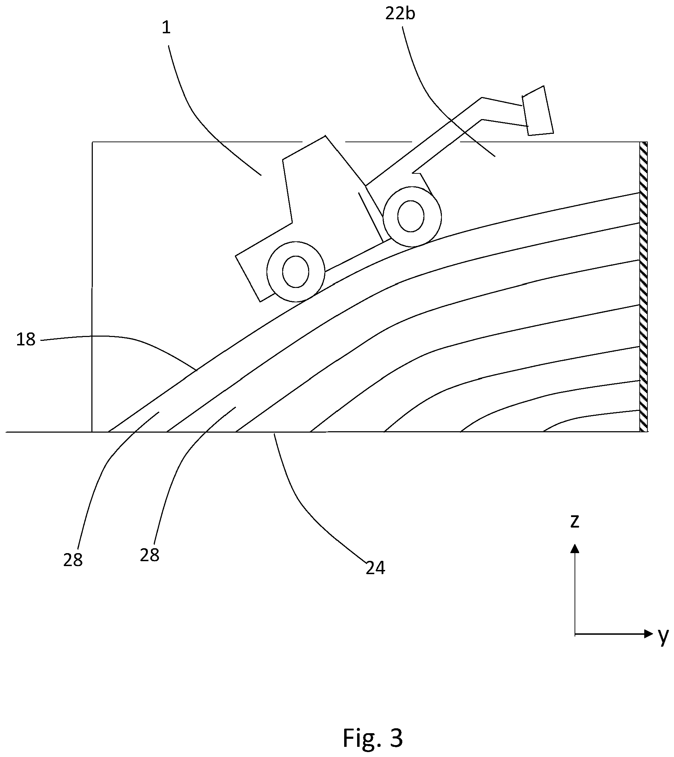

Figure 3 is a section view of the body of harvested crop 18 through the plane x of Figure 2. Figure 3 illustrates that the harvested crop 8 is deposited in layers 28 and compacted once a layer has been formed. The operator moves the working machine 1 over the harvested crop 18, and the weight of the working machine 1 compacts the harvested crop 18 via the ground engaging structure 4, 5.

The working machine will compact the body of the harvested crop 18 whilst the implement 8 distributes an additional top layer of harvested crop onto the body of the harvested crop 18. Periodically the working machine 1 will typically perform a pure compacting operation where it solely passes over the body of harvested crop in a more methodical fashion. This process is repeated such that the working implement 8 progressively deposits more harvested crop onto the body of the harvested crop 18 as it is harvested in order to enlarge the body between compaction operations.

To perform the compaction operation, the operator will generally drive forwards and backwards the length of the body whilst working progressively from one side of the body to the other.

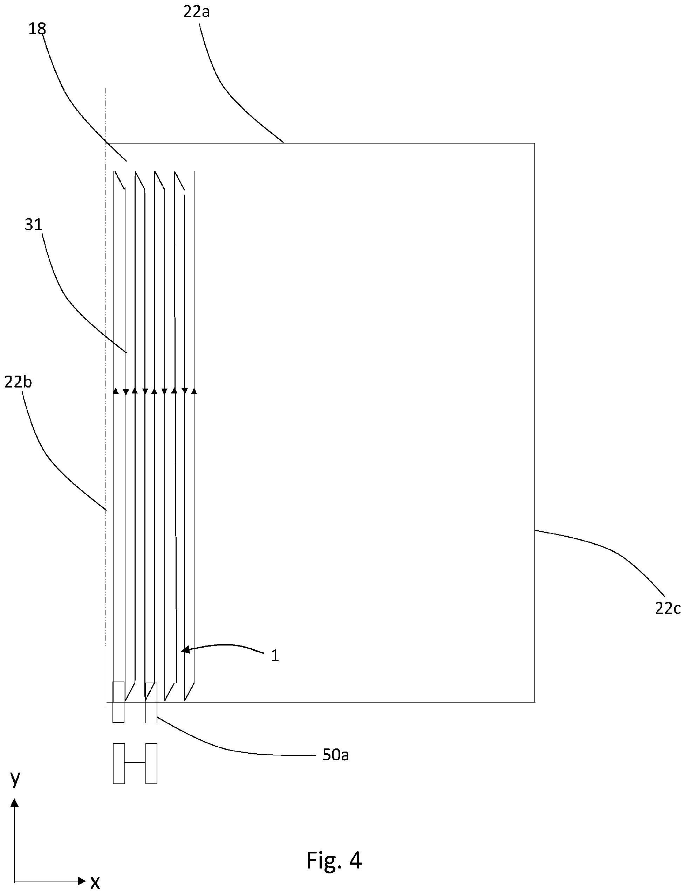

To compact the harvested crop 18, the working machine 1 passes over each of the sections in a direction generally parallel to a y-axis. In this embodiment, the y-axis is parallel to a side wall 22b of the storage receptacle 20. An example of a compaction path 31 for at least partially compacting a section is illustrated in Figure 4. The operator moves the working machine 1 in a cyclical forwards and backwards motion. When the working machine 1 reaches y-axis boundaries of the area 52, the operator adjusts the working machine 1 such that a component of motion of the working machine 1 is in a direction generally parallel to the x-axis. As such, the working machine progressively moves along the x-axis, as well as forwards and backwards along the y-axis. In addition, as the harvested crop is distributed on top of the body of harvested crop 18, and the working machine 1 is driven over this, the displacement of the working machine changes in a direction generally parallel to a z-axis.

The x-axis displacement between each of the forwards and backwards passes is less than the y-axis displacement (ideally equating to around one tyre width). This is to help ensure the tyres actually compact the entirety of the body of the harvested crop in the section 19a. Once the operator has moved the working machine 1 over the compaction path 31, the operator may then repeat the operation over the path 31 with each of the direction arrows reversed. It shall be appreciated that the compaction path 31 does not extend over the entirety of the area 52 for reasons of clarity, however the path would be transposed in the x-direction so as to pass over the entirety of the area 52.

Figure 5 shows the control system 30 of the working machine 1. The control system 30 assists the operator in performing the compaction operation. The control system 30 includes a controller 32 and at least one sensor 34 for providing an input 36 to the controller 32. The control system 30 of this embodiment further includes memory 42 for storing the input 36, an input device 44 for inputting machine parameters 46, and an output device 48 for representing the output 40. It shall be appreciated that in alternative embodiments, any combination of these components may be present/omitted from the control system 30.

The controller 32 determines a state of compaction 38 of the body of the harvested crop 18 based on at least the input 36 from the sensor 34. The controller 32 is programmed with an algorithm for determining the state of compaction 38 of the body of harvested crop 18 and comparing the state of compaction 38 to a required state of compaction 39. The algorithm may be a machine learning algorithm. The controller 32 of this embodiment is a microprocessor, as the data storage capabilities are suitable for the application. In alternative embodiments, any suitable device may be used as the controller, for example a microcontroller. The controller 32 may also be able to utilise information already available on the machine Controller Area Network (CAN) bus to determine parameters such as engine speed and/or ground speed of the working machine 1.

In the embodiment of Figures 1 to 9, the sensor 34 is an inertial sensor 34 for detecting the position of the working machine 1 relative to the body of the harvested crop 18. The inertial sensor 34 detects the relative position of the working machine 1 relative to the body of harvested crop 18 in the x-direction and the y-direction. The inertial sensor 34 uses an accelerometer to detect the linear acceleration of the working machine 1, and a gyroscope to detect the rotational rate of the working machine 1. The inertial sensor 34 may be located at any suitable location on the working machine 1 for example on the underside of the machine body 2. Such sensors are generally low cost, compact and robust, being found in numerous electronic devices such as smartphones.

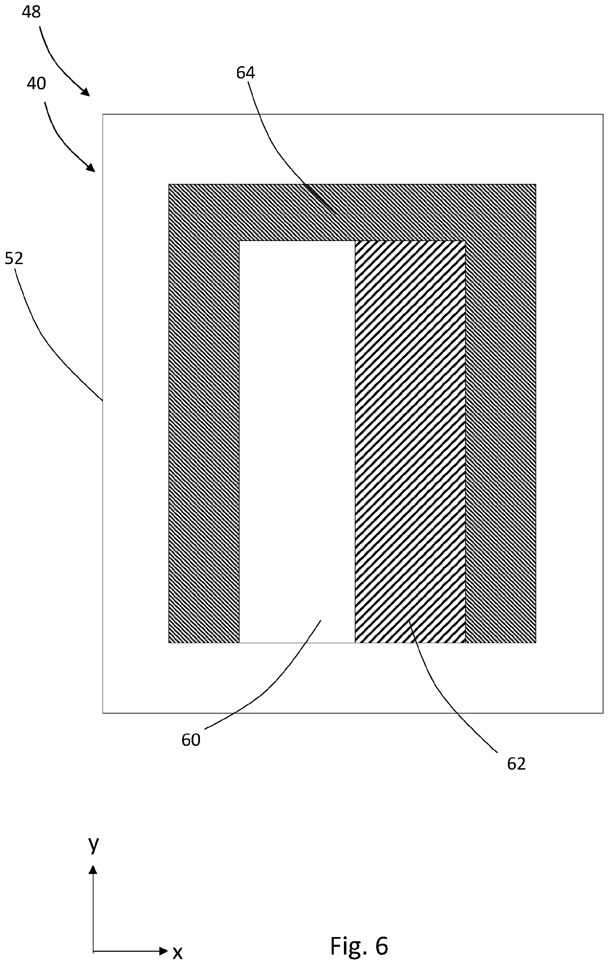

The output device of this embodiment is a display 48 for displaying a visual indicator of the output 40. The output 40 is indicative of the state of compaction 38 of the body of the harvested crop 18 in the x and y directions. The display 48 may be positioned at any suitable location within the operator cab 3 which is visible to the operator as they operate the working machine 1. As illustrated in Figure 6, the visual indicator is a map indicating the state of compaction for each section 60, 62, 64 of the area 52. The map indicates the areas which are partially compacted, the areas which are fully compacted and the areas which are yet to be compacted.

It shall be appreciated that in alternative embodiments, the output device may be any suitable visual indicator, for example a light. Alternatively, the output device may be any suitable device, such as an audio indicator.

The input device 44 of this embodiment is a touch screen interface located inside the operator cab. In alternative embodiments any suitable input device may be used, or the input device may be wireless such that machine parameters 46 can be inputted remotely.

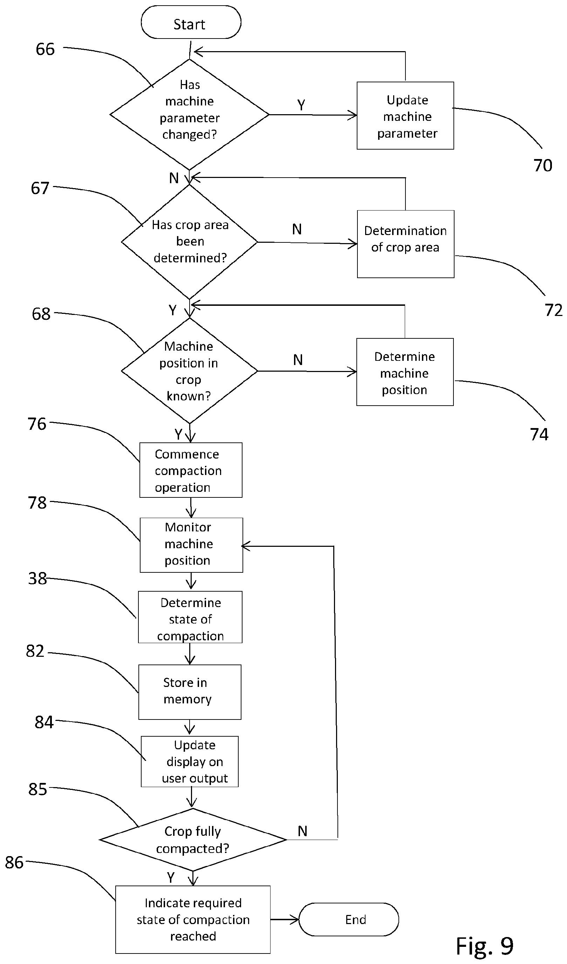

Figure 9 illustrates an embodiment of the algorithm followed by the control system 30 to assist in performing the compaction operation on the body of the harvested crop 18.

At step 66, prior to commencing the compaction operation, the operator inputs the fixed machine parameters 46 into the controller 32 via the input device 44. For example, the fixed machine parameters 46 may be inputted into the controller 32 at the manufacturing site, or upon reaching the compaction site, or a combination of the two. The machine parameters 46 may be selected from at least one of the following: distance between the pair of tyres 4, 5, width of each tyre 4, 5, working machine weight transmitted through each tyre 4, 5, diameter of each tyre 4, 5 of the working machine 1, a distance between the front and rear pair of tyres, and a pressure of the tyres 4, 5. The fixed machine parameters 46, for example the distance between the pair of tyres 4, 5 and/or width of each tyre 4, 5 are used to determine whether the wheels of the working machine 1 have passed over a section of the body of the harvested crop 18.

The machine parameters 46 are stored in the control system memory 42. Upon commencing a new compaction operation, if there has been a change to one of the machine parameters 46, the operator performs step 70 and updates the machine parameter 46. For example, if the tyres 4, 5 have been changed, the machine parameters 46 corresponding to the width of the tyres, diameter of tyres and/or tyre pressure may need to be updated.

The operator may also input the required state of compaction 39 into the input device 44 prior to commencing the compaction operation.

If at step 66, the controller 30 confirms that the machine parameters 46 are up to date, the controller 30 proceeds with step 67.

At step 67, the controller 32 determines whether the area 52 of the harvested crop to be compacted is known. If the controller 30 determines the area 52 is not known, the controller performs the determination of the area at step 72. The input 34 from the inertial sensor 36 is used by the controller 32 to determine the area 52 of the harvested crop 18 to be compacted. The determination of the area 52 of the harvested crop 18 occurs prior to commencing the compaction operation.

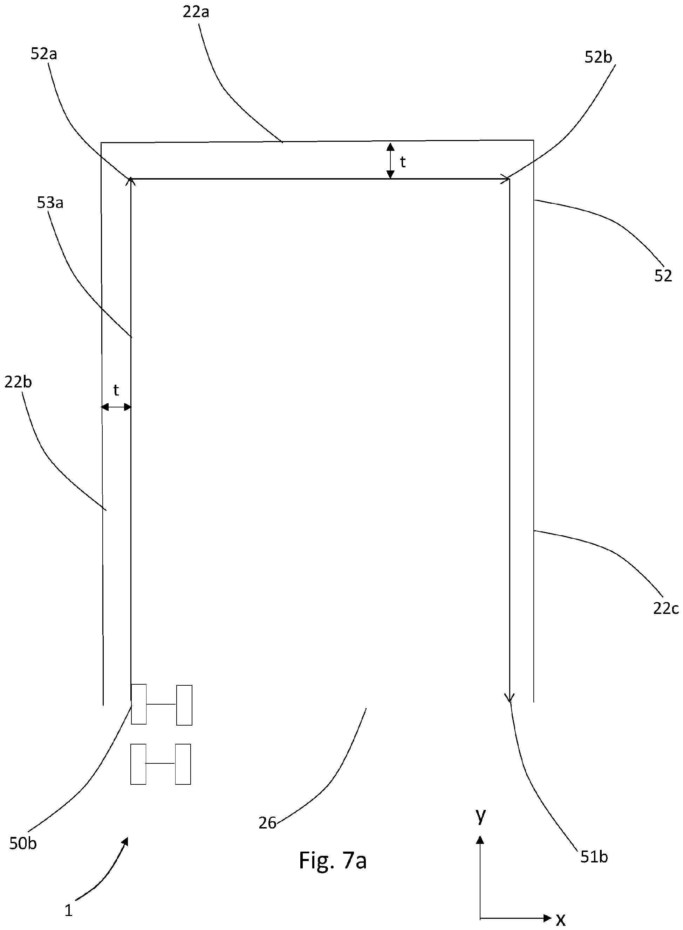

As illustrated in Figure 7a, in this embodiment the area 52 of the harvested crop 18 is determined by the operator driving the working machine 1 to each corner 52a-d of the area 52, for example along the path 53a. The path 53a is simplified for reasons of clarity, however in practice the operator would need perform an operation, such as reversing the working machine 1, to change the orientation of the working machine 1 from y-facing to x-facing at each corner 52a-d. The operator may follow any suitable path to reach the corners 52a-d.

When the operator reaches each of the corners 52a-d, the operator may press a button. The memory 42 stores the position indicative of one of the corners 52a-d. Once the memory 42 has stored the relative position of each of the corners 52a-d, the controller 32 can use the data points to determine the area 52 of the body of the harvested crop 18. Alternatively, the operator may omit one or two of the corners 52a-d, and determine the area 52 by extrapolating the maximum displacement of the working machine 1 along the x-axis and the y-axis. In the embodiment where the operator drives to two corners, they would need to be diagonally opposite corners, for example 52a and 52c or 52b and 52d to store both the maximum x and y displacements of the area 52.

The working machine 1 may not be able to reach the perimeter of the area 52 without the body 2 and/or the tyres 4, 5 scraping against the side walls 22a-c. Additionally, the body of the working machine 1 may be wider and longer than the width between tyres 4, 5 and distance between the front and rear axles respectively. The controller 32 may therefore add on a tolerance t when determining the area at step 72.

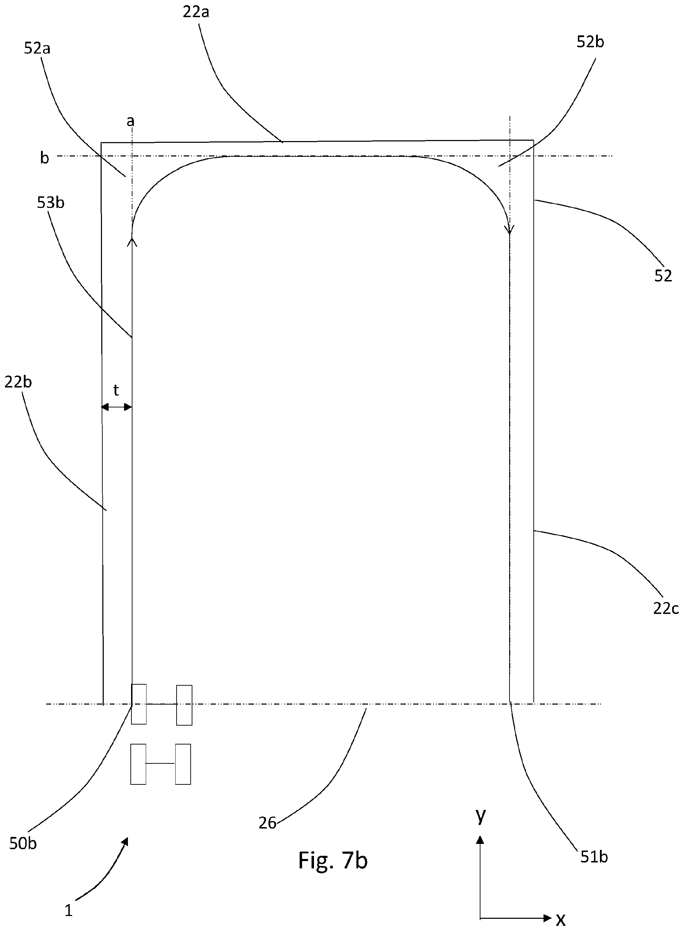

An alternative embodiment of determining the area 52 is illustrated in Figure 7b. In this embodiment, the area 52 of the harvested crop 18 is determined by the operator driving the working machine 1 along a perimeter path 53 indicative of the perimeter of the area 52, and the memory 42 storing the perimeter path 53. The perimeter path 53a has a start point 50b and an end point 51b.

During the determination of the area 52 of Figure 7b, the working machine 1 may not be able to reach each corner 52a, 52b of the area 52 due to the radius of movement of the working machine 1 when changing orientation from facing the y-direction to facing the x-direction, and vice versa. However, the maximum displacement of the working machine 1 along the y-axis and the x-axis respectively can be extrapolated to determine the total area 52. The extrapolation along the x and y axes are indicated by dashed lines a, b respectively. Once the maximum x and y displacements a, b are known, the controller 32 determines the total area by multiplying the x and y displacements. The memory 42 stores the area 52 of the body of the harvested crop 18.

The data corresponding to the area determination 52 may be exported or stored permanently by the memory 42 of the control system 30. This means that the next time a compaction operation is initiated on the same site, the area of the compaction site may be imported by the controller instead of the operator performing the area determination step.

The area 52 of the body of harvested crop 18 may also be manually inputted into the control system 30 and stored by the memory 42.

Once the crop area 52 has been determined, the controller 32 determines whether the position of the working machine 1 relative to the body of the harvested crop 18 is known (step 68). If the position is not known, the controller 32 uses the input from the inertial sensor 34 to perform step 74 of determining the working machine position. As the area 52 was determined at step 72, the controller 32 can determine whether the working machine 1 is within the area 52 of the body of the harvested crop 18. If the position is not known, the controller 32 instructs the operator to return the working machine to a predetermined location. For example this may be the starting position 50b for determining the crop area 52, corresponding to the machine being at a left hand corner of the area with the machine parallel to the wall 22b and the front axle aligned with the end of the wall.

In the event that the working machine 1 is within the area 52, the compaction operation commences at step 76. In the event that the working machine 1 is not within the area 52, the controller 32 indicates to the operator to move the working machine 1 into the area 52, and the compaction operation will not commence until the working machine 1 is within the area 52. In this embodiment, the controller 32 commences the compaction operation 76 when the working machine 1 is positioned at the start point 50b defined by the start point 50b of the perimeter path 53 of the area determination 72.

At step 76, the controller 32 commences the compaction operation. The controller 32 determines the initial state of compaction 38 and produces an initial output. In the display 48 of Figure 6, in the initial output the entirety of the area 52 would be indicated as the same colour or shade, because no compaction has taken place.

Once the compaction operation has commenced, the inertial sensor 34 continuously monitors the position 78 of the working machine 1 in the x and y directions relative to a predetermined location throughout the compaction operation. The predetermined location may be any suitable datum point of the area 52, for example a start point 50a of the compaction path 31, a boundary of the area 52 of the harvested crop, or the start or end point 50b, 51b of the perimeter path 53b, or one of the corners of the area 52a-d.

At step 78, the controller 32 uses the input 36 from the inertial sensor 34 to continuously monitor the relative position of the working machine 1 and determine the sections over which the working machine 1 has passed and compacted, and the sections which the working machine 1 has not passed over, and therefore have not been compacted. The memory 42 stores the path of the working machine 1 over the body of the harvested crop 18.

Since readings from inertial sensors may "drift" and become less accurate over time, to improve the accuracy monitoring the position of the working machine 1 (step 78), the control system includes a calibration function. The control system 30 calibrates the inertial sensor 34 by instructing the operator to move the working machine to a calibration location and to position the machine in a particular orientation. This calibrates the sensor 34 in both the x and the y directions. The calibration location may be any of the start point 50a of the path 31, one of the corners 52a-d of the area 52, the start or end point 50b, 51b of the perimeter path 53 and/or a location on the perimeter of the area 52.

The calibration of the sensor 34 may occur at regular intervals throughout the compaction operation. Alternatively, the controller 32 may trigger an alert telling the operator to return to the calibration location upon determining the working machine 1 has drifted from the detected position. For example, if the controller 32 determines the working machine 1 is outside the area 52 during the compaction operation, this may trigger a calibration alert. The operator may press a button to indicate that the working machine has been returned to the calibration location.

The controller 32 uses the position of the working machine 1 to determine the state of compaction 38 in accordance with an algorithm programmed therein, in conjunction with the fixed parameters such as tyre width, tyre spacing and wheelbase.

Thus for each path of each tyre 4, 5 the controller 32 adds the contribution to compaction provided by each tyre passing over a location to an amount of compaction provided by previous passes over that location to determine an overall state of compaction, and stores that state of compaction in the memory 42 at step 82.

It is inherent that when rolling of the harvested crop 18 occurs by a machine that has four wheels 4, 5 in a 2x2 configuration with a spacing in a y and x direction in a path of as depicted in Figure 4 that sections of the body of the harvested crop 18 may have a state of compaction which is lower since only the wheels on the left hand side, right hand side, front or rear of the machine 1 may be able to reach that area.

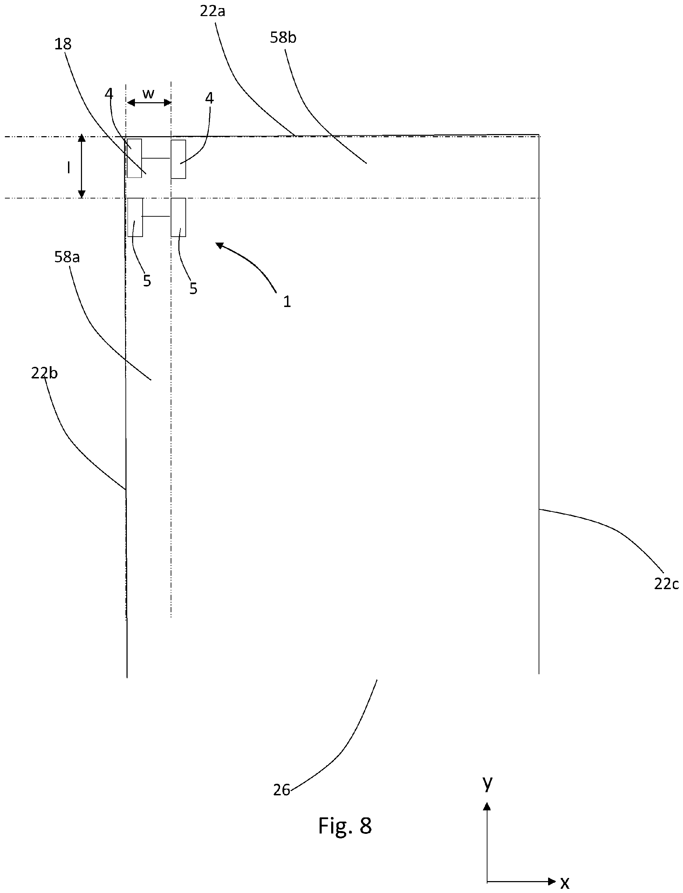

For example, in section 58a, when the working machine 1 is less than a distance w in the x direction from the side wall 22b, only one of each of the front and rear pair of tyres 4, 5 passes over the harvested crop. This is illustrated in Figure 8, where the distance w is approximately equal to the distance between each of the front pairs of tyres 4 (or between each of the rear pairs of tyres 5) plus the width of one of the tyres 4, 5. Similarly, in section 58b, the working machine 1 is less than a distance l in the y direction from the side wall 22a, only the front pair of tyres 4 passes over the harvested crop. The distance l is approximately equal to the distance between the front and rear axles plus the radius of one wheel. By calculating compaction on a per-wheel 4, 5 basis and knowing the wheel spacing in the x and y directions, the controller 32 is able to inherently account for this when determining the degree of compaction at a particular location.

Once the state of compaction 38 has been stored in the memory 42, the controller 32 produces an output 40 indicative of the state of compaction, based on the input 36 from the inertial sensor 34. In this embodiment, the output 40 is a real time output and provides an indication of the state of compaction 38 of the body of the harvested crop 18 at a particular section or location thereof. For example the body of the harvested crop 18 may be divided into an array or grid of smaller areas by the controller 32, for example 0.25m x 0.25m, in order to calculate the degree of compaction in each of the x and y directions based on how many times the working machine 1 has passed over the grid area, and enable it to be output. The output 40 is communicated to the operator via the output device 48. For example the controller may determine that two passes or three passes over a particular location provide a suitable level of compaction.

The controller 32 compares the state of compaction 38 to the required state of compaction 39 to determine whether the state of compaction 38 has reached the required state of compaction 39. If the required state of compaction 39 has not been reached, the controller 32 performs step 84 and updates the output device 48 to indicate the real time state of compaction 38 to the operator.

For example, referring to Figure 6, which shows an output device 48 in the form of a liquid crystal display (LCD) there are depicted a region 60 that has no shading, a mid-shaded region 62, and a dark shaded region 64. This enables the operator to differentiate between regions which have reached the required state of compaction 60, regions which have reach a partial state of compaction 62, and regions which have not been compacted 64. In addition, although not shown, the output device may also depict the location and orientation of the working machine 1 with respect to the body of the crop 18 and update this in real time as the machine moves. If the required state of compaction 39 has not been reached, the operator continues to perform the compaction operation, following a forwards and backwards path over the area 52, for example path 31, and focusing on areas of lower compaction.

In order to assist the operator with the compaction operation, the output 40, in some embodiments, also indicates a command to the operator, for example to pass over a section of the harvested crop 18, to avoid passing over a section of the harvested crop 18, to change the orientation of the working machine 1, and/or to increase or decrease a travelling speed of the working machine 1. This may improve the efficiency of the compaction operation by removing operator judgement, for example if the controller 32 determines that the operator determines a number of passes the working machine should perform over a particular section of the body of harvested crop 18 to reach the required state of compaction.

At step 85 the controller interrogates the memory to check if all areas of the body of the crop have reached the required state of compaction. If not, the controller 32 repeats steps 78, 38, 82, and 84 and the operator continues the compaction operation until the controller 32 determines that the state of compaction 38 has reached the required state of compaction 39.

At step 86, the controller 32 has determined that the required state of compaction has been reached, and the controller 32 provides an indication to the operator. This could be by updating the display 48 such that the colour/shade of the map is uniform, and/or by triggering an alert.

At this point, if the harvest is complete or the storage receptacle 20 is full, the harvested crop 18 may be covered in a plastics sheet so that the anaerobic fermentation may take place to convert the crop into silage.

Alternatively, the operator may start depositing a further layer of uncompacted crop over the compacted crop and the process may be repeated layer-by-layer until harvesting is completed. The operator may press a button or otherwise provide an input to indicate that an additional layer of harvested crop has been distributed. The controller 32 may store the output 40 of each layer, and combine the outputs 40 to create a 3D plot of the state of compaction of the body of the harvested crop 18. As additional layers are built up the front edge of the harvested crop 18 in the storage receptacle 20 may advance, and so at least step 67 may also need to be repeated.

The compaction data used to generate the output may be exported from the memory 42 as a record that the crop has been properly compacted, for example as an electronic image file or as a physical printout. This may be advantageous if the compaction operation is performed by a contractor paid by a farmer to perform this job as it enables the contractor to provide evidence to the farmer that they have performed the compaction process to a proper standard. In alternative embodiments, any suitable sensor may be used to detect the absolute and/or relative position of the working machine. For example, a GNSS receiver, or a steering angle sensor in combination with a travelling speed sensor may be used in place of the inertial sensor 34.

In an alternative embodiment the sensor 34 is a global navigation satellite system (GNSS) receiver for detecting the absolute position of the working machine 1. This embodiment is a more advanced adaptation of the system of the first embodiment. The GNSS receiver may be located at any suitable location on the working machine 1, for example in the operator cab 3. The GNSS receiver may be a GNSS real-time kinetic positioning (RTK) receiver, or any other known system of obtaining increased accuracy from a standard GNSS system. GNSS RTK receivers improve the accuracy of the position detection by using a local station, for example a station within 15km, to calibrate the absolute position from a GNSS satellite with the position outputted by the receiver. As such accuracy may be within millimetres in the x and y directions and centimetres or at least tens of centimetres in the z direction.

GNSS RTK receivers have accuracy benefits compared to traditional systems such as standard GPS systems, and compared to more simplistic sensors such as inertial sensors, as well as being relatively low cost. This particularly beneficial when determining the position of the working machine 1 in the z-direction, because the error associated with alternative sensors and GNSS systems is relatively high compared to the z-displacement of the working machine 1. It shall be appreciated that in alternative embodiments, any suitable GNSS system with a suitable level of accuracy may be used.

In the embodiment of the inertial sensor 34, it is difficult to determine the z-displacement of the working machine 1 due to inaccuracies associated with inertial sensors. The x and y coordinates of the calibration locations are fixed throughout the compaction operation, meaning the inertial sensor 34 can be easily calibrated in the x and y directions. The z-displacement varies throughout the compaction operation, as uncompacted harvested crop is distributed on the body, and the working machine 1 performs the compaction operation. Therefore, it is difficult to recalibrate the inertial sensor in the z-direction without the operator driving off the storage receptacle 20.

In this alternative embodiment, the operator performs substantially the same procedure as the embodiment of the inertial sensor in terms of inputting the machine parameters, the crop parameters and the required state of compaction at step 70. The controller 32 follows a similar control algorithm to that of Figure 9.

The primary difference is that at steps 72, 74 and 78, the controller 32 determines the absolute position of the working machine 1 in the x, y and z directions, with no recalibration of the machine position being required.

An advantage of determining the position of the working machine 1 in the z-direction is that the controller 32 can determine whether an additional layer of uncompacted harvested crop has been deposited on the body of harvested crop 18 based on the z-displacement of the working machine 1. If the controller 32 determines there has been an increase in the absolute z-displacement, this is most likely indicative that a new layer of uncompacted harvested crop has been distributed on the body 18.

The controller 32 uses the absolute position of the working machine 1 to determine the area of the harvested crop at step 72, and whether the working machine 1 is within the area 52 of the harvested crop 18 at step 74. In the event that the working machine 1 is within the area 52, the compaction operation commences as described above in the embodiment with the inertial sensor.

In this embodiment, the memory 42 stores the output 40 indicative of the state of compaction of each of the layers in a 3D compaction mesh. For example the body of harvested crop 18 may be divided into a 3D mesh of smaller areas by the controller 32, for example 0.25m x 0.25m x 0.25m, in order to calculate the state of compaction in each of the x, y and z directions and enable it to be output. This may improve the efficiency of the compaction operation, because the operator can see when the top layer of the body 18 has been sufficiently compacted, and then distribute an additional layer of harvested crop on the body 18.

The controller 32 updates the output device 48 to indicate that an additional layer of uncompacted harvested crop has been distributed on the body of harvested crop 18. Therefore, in this embodiment, the state of compaction displayed on the output device 48 is indicative of the state of compaction of the top layer of the body of the harvested crop 18. The operator may be able to view the state of compaction of buried layers via the output device 48 during the compaction operation, in order to confirm that the entirety of the body 18 has been sufficiently compacted. The output 40 may use the same shading system as the embodiment of Figure 6 to indicate regions which have reached the required state of compaction 60, regions which have reach a partial state of compaction 62, and regions which have not been compacted 64. Therefore, a 3D map indicating a sufficiently compacted body of harvested crop 18 would have no shading throughout, even as the operator sliced through the layers.

Once the compaction operation has been completed, the compaction data may be exported from the memory as a 3D matrix indicative of the final state of compaction of the compacted crop. If the compaction data is stored electronically, the operator may be able to "cut through" or remove layers of the 3D map in order to reveal the state of compaction of each layer of the compacted crop. This enables a contractor to provide evidence to the farmer that they have performed the compaction process to a proper standard throughout the entire body 18.

In a further alternative embodiment, the sensor 34 may include a working machine travelling speed sensor and a steering sensor for detecting the position of the working machine 1 relative to the body of the harvested crop 18. The input from the travelling speed sensor can be used by the controller 32 to determine the displacement of the working machine 1 from a datum position, for example the start point 51a of the path 31. The input from the steering angle sensor can be used by the controller 32 to determine the angle at which the working machine 1 has travelled relative to a fixed axis, for example the y-axis. The relative position of the working machine in polar coordinates is therefore determined from the sensor inputs.

The operator performs substantially the same procedure as the embodiment of the inertial sensor in terms of inputting the machine parameters, crop parameters and the required state of compaction, setting the area of the harvested crop and calibrating the sensor.

In further alternative embodiments, a machine vision system such as a light detection and ranging (LIDAR) sensor system may also be used to determine the relative position of the working machine and to determine the area 52. The LIDAR system uses the reflection of lasers or light beams off the walls 22a, 22b, 22c of the storage receptacle 22 to determine the position of the working machine 1.

An electronic compass may also be used to determine the position of the working machine 1 i.e. to provide an orientation of the machine relative to the body of the harvested crop. This is beneficial to enhance the information provided by the GNSS system.

In a further alternative embodiment, any of the inertial sensor, GNSS receiver, LIDAR sensor, steering angle sensor, compass and/or travelling speed sensor may be used in combination as part of the at least one sensors 34. This may improve the accuracy of the determination of the state of compaction by the controller 32. If used in combination, the overall positional accuracy may be checked by comparing the outputs of position from the sensors 34. If the difference exceeds a predetermined threshold, the operator may be instructed to undertake calibration as set out above.

For example, in one such embodiment, the at least one sensor 34 is a GNSS aided inertial navigation system, including a GNSS receiver and an inertial sensor. The GNSS receiver has the advantage of detecting the absolute position of the working machine, meaning the "drift" errors that accrue with relative position sensors is avoided. However, a GNSS receiver alone (in particular a standard accuracy GNSS sensor) may lead to inaccuracies in the determination of the state of compaction. This may result in sections of the harvested crop which have not been sufficiently compacted.

The combination of the GNSS receiver and the inertial sensor can be used to help mitigate these inaccuracies. For example, the controller 32 can compare the absolute position detected by the GNSS receiver with the relative position detected by the inertial sensor. The controller 32 can then determine whether the values are within a predetermined tolerance of one another. If the values are within the predetermined tolerance, the controller will carry on with the compaction operation. If the values are not within the predetermined tolerance, the controller 32 will send an alert to the operator, or adjust the output. The alert may tell the operator to return to the calibration location.

Any combination of the above sensors, or indeed any additional sensors, may be used as part of the control system 30. For example, the steering angle sensor and the travelling speed sensor may be used with the GNSS aided inertial navigation system to improve the accuracy of the determination of the state of compaction.

The at least one sensor 34 may also include a tilt sensor for measuring the angle of the working machine relative to a fixed axis. The input from the tilt sensor may be used in the embodiments of any of the inertial sensors, the GNSS receiver and/or the travelling speed and steering angle sensors. Tilt sensors are commonly fitted to working machines, and can be utilised by the controller 32 to determine when the angle of the working machine exceeds a predetermined tilt angle relative to the fixed axis. This can be indicative that the working machine has mounted the area defined by the crop, in this embodiment the storage receptacle 20. If an initial height of the body of harvested crop 18 is inputted into the controller 32, the controller can use the height to determine an inclination threshold indicative that the working machine 1 has mounted the storage receptacle 20, as opposed to that the working machine 1 is travelling on an uphill gradient. Additionally, the tilt sensor may be used to determine the z-displacement of the working machine 1 by storing the input from the tilt sensor indicative of the angle of the ground over which the working machine 1 is moving. The tilt sensor may be used in combination with any of the above sensors to detect the z-displacement of the working machine.

Additionally, the at least one sensor may also include an altimeter, e.g. a barometric altimeter. When the machine 1 is stationary, the rate of change of altitude as indicated by the altimeter (and/or an inertial sensor) may be used to indicate the state of compaction 38 of the body of harvested crop. A relatively low rate of change may be an indication of a well compacted crop at that location, and a relatively high rate of change may be indicative of a poorly compacted crop. As such the degree of compaction can be checked by performing such stationary tests at one or more locations on the body of the harvested crop 18.

In further alternative embodiments, the tyre pressure, tyre diameter and tyre width can be used by the algorithm to calculate a contact patch of each tyre, which in conjunction with weight can determine the pressure the machine 1 exerts on that area of crop 18 via that tyre. Tyre pressure may be measured using tyre pressure sensors. Machine speed provides a "dwell time" of pressure at a particular location. The combination of dwell time and pressure provides a value indicative of the degree of compaction contributed by that tyre 4, 5 passing over the harvested crop 18.

Additionally, the weight of the working machine 1 is unlikely to be evenly distributed between the tyres 4, 5. When there is no load on the fork 8, a greater proportion of the weight is likely to be distributed through the rear tyres 5, because of the force from a rear counterweight. The controller 32 may therefore determine whether the front tyres 4 or the rear tyres 5 have passed over the harvested crop 18, and adjust the state of compaction accordingly.

The moisture content of the body of the harvested crop may be measured to provide a further input at step 66. The moisture content may be used by the compaction algorithm to adjust the required state of compaction. Higher moisture levels require less compaction than lower moisture levels.

The type of crop may also be input at step 66 since maize of alfalfa may have a differing required state of compaction to grass, for example.

In a further alternative embodiment, the controller may produce an output to automatically control the movement of the working machine over the body of harvested crop 18 to perform one of the above operations. This may be particularly advantageous when the working machine is a driverless working machine performing the compaction operation without an operator present. Alternatively, certain function of the working machine may be autonomous, such as control of the loader arm or control of machine travelling speed. The operator may, for example, only be responsible for steering the working machine. This simplifies the operator's job, and may give the operator more time to focus on the state of compaction of the body of the harvested crop.

The controller 32 may determine the area of additional uncompacted harvested crop distributed by the working implement based on inputs from the hydraulic system of the working machine (e.g. actuation of a hydraulic service in a particular direction may indicate crop being tipped or pushed off a working implement) and/or an angle of the working implement with respect to the working machine or an absolute orientation.

The output to control movement of the working machine may include directly controlling at least one of machine travelling speed, machine travelling direction and/or machine steering. Alternatively, the controller may implement a combination of automatic control of the working machine and adjustment of the output to facilitate manual intervention from the operator. In an embodiment which implements automatic control, at the end of the compaction operation the controller 32 may automatically move the working machine 1 to any suitable datum point, for example the start point 50a of the path 31.

In further alternative embodiments there are multiple working machines performing the depositing and/or compacting operations where control of the working machines is manual, automatic or a combination of the two. For example compacting may be performed by an autonomous machine and depositing by a manually operated machine.

This may improve the speed of the compaction operation whilst maintaining the same standard of compaction.

In the embodiments which utilise multiple working machines, the controller of each working machine may be able to communicate locally with the controller of each the other working machines, e.g. using a suitable wireless protocol such as WiFi or Bluetooth. Additionally or alternatively each working machine may communicate with a server, such as a cloud based server. The state of compaction may then be determined by combining the contribution to compaction from each of the working machines either locally on the controllers or on the server. The output, which could be displayed on a remote or a local output device, may be indicative of the overall state of compaction of the body of harvested crop from all of the working machines.

Although the teachings have been described above with reference to one or more preferred embodiments, it will be appreciated that various changes or modifications may be made without departing from the scope as defined in the appended claims.

## Claims

1. A control system for a working machine, wherein the working machine comprises a ground engaging structure to perform a compaction operation by passing over a body of a harvested crop; the control system comprising:
a controller; and
at least one sensor providing an input to the controller;
wherein the controller is configured to determine a state of compaction of a section of the body of the harvested crop based on at least the input from the sensor; and wherein the controller provides at least one output to control the movement of the working machine over the body of the harvested crop and/or to provide an indication to an operator of the working machine as to the state of compaction of the body of the harvested crop at a particular section thereof.

2. The control system of claim 1, wherein the control system is configured to store at least one machine parameter, optionally the machine parameter being at least one of: distance between a pair of tyres of the ground engaging structure, width of each of the pair of tyres, diameter of each of the pair of tyres of the working machine, and optionally wherein the control system is configured to adjust the output based on the stored machine parameter.

3. The control system of claim 2, wherein the controller is configured to determine when the working machine is less than a distance between each of a front or rear pair of tyres plus the width of one of the tyres from a side of the body of harvested crop, and/or wherein the controller is configured to determine when the working machine is less that a distance between a front and a rear axle plus a radius of one wheel from a side of the body of harvested crop.

4. The control system of claim 3, wherein the controller is configured to adjust the output when the controller has determined that the working machine is less than a distance between each of the front or rear pairs of tyres plus the width of one of the tyres from a side of the body of harvested crop, and/or that the working machine is less that a distance between a front and rear axle plus a radius of one wheel from a side of the body of harvested crop.

5. The control system of any preceding claim, wherein the at least one sensor is configured to determine the position of the working machine as the working machine passes over the body of the harvested crop, optionally wherein the at least one sensor is configured to determine the position of the working machine in at least one of an x-direction, a y-direction, and/or a z-direction.

6. The control system of any preceding claim, further configured to produce a real time output indicative of the state of compaction of the harvested crop, optionally wherein the output is a visual indication of the state of compaction of the harvested crop, optionally wherein the visual indication is a map.

7. The control system of any preceding claim wherein the output is configured to indicate to the operator to control at least one of machine travelling speed, machine travelling direction and machine steering and/or to directly control movement of the working machine by controlling at least one of machine travelling speed, machine travelling direction and machine steering, and/or wherein the sensor includes at least one of: a GNSS receiver, an inertial sensor, a tilt sensor configured to measure the inclination of the working machine relative to a fixed axis, a steering angle sensor, and a travelling speed sensor, a LIDAR sensor, and an electronic compass.

8. The control system of any preceding claim, wherein the at least one sensor is configured to detect the absolute position of the working machine in at least an x and y plane and/or wherein the at least one sensor is configured to determine the position of the working machine relative to a predetermined location in at least an x-y plane, optionally wherein the predetermined location is at the start point of the working machine and/or on a boundary of the harvested crop, and/or wherein the at least one sensor is further configured to detect the rate of change of altitude of the working machine.

9. The control system of any preceding claim, further configured to determine whether the harvested crop has reached a predetermined state of compaction based on inputs from the at least one sensor, optionally wherein the control system determines the predetermined state of compaction based on a number of passes over a particular location.

10. The control system of any preceding claim, further configured to determine the area of the harvested crop to be compacted based on inputs from the at least one sensor, optionally wherein the control system is further configured to determine the area of the harvested crop to be compacted by storing a location of the working machine indicative of at least one corner of the area.

11. The control system of any preceding claim further configured to produce a real time output indicative of the state of compaction of the harvested crop, and further configured to automatically adjust the output to indicate one of the following to the operator: to pass over a section of the harvested crop, to avoid passing over a section of the harvested crop, to change the orientation of the working machine, to increase or decrease a speed of the working machine, optionally wherein the control system is further configured to adjust the output to indicate that the operator should increase the number of times the working machine passes over a section of the harvested crop, decrease the speed of the working machine and/or change the orientation of the working machine upon determining that the harvested crop has not reached the required state of compaction.

12. A working machine comprising the control system of any one of claims 1 to 11, further comprising:
a ground engaging structure, optionally wherein the ground engaging structure comprises at least one pair of tyres; and
optionally a working implement configured to distribute additional harvested crop onto the body of harvested crop, optionally wherein the working implement is a fork, optionally wherein machine parameters are stored in the control system, and optionally wherein the machine parameters are at least one of: distance between the pair of tyres, width of each tyre, diameter of each tyre of the working machine, distance between a front and a rear pair of tyres, optionally wherein the control system is configured to adjust the output of the working machine based on the machine parameters.

13. The working machine of claim 12, wherein the controller is configured to determine when the working machine is less than a distance between each of the front or rear pair of tyres plus the width of one of the tyres from a side of the body of harvested crop, and/or wherein the controller is configured to determine when the working machine is less that a distance between a front and rear axle plus a radius of one wheel from a side of the body of harvested crop, optionally wherein the controller is configured to adjust the output of the working machine based on the determination of the distance from the of the side of the body of harvested crop.

14. The working machine of any of claims 11 to 13, wherein the control system is configured to determine whether the working machine is within an area of harvested crop based on inputs from the at least one sensor, optionally based on inputs from a tilt sensor and/or a position sensor, optionally wherein the determination is based on the position of the working machine in a z-direction.

15. A method of controlling a working machine to perform a compaction operation by passing over a body of a harvested crop, the method comprising the step of:
detecting an input from at least one sensor;
determining a state of compaction of the body of the harvested crop based on the input;
providing an output to control the movement of the working machine over the body of the harvested crop and/or to provide an indication to an operator of the working machine as to the state of compaction of the of the harvested crop at a particular section thereof.
